# EUROPEAN PATENT SPECIFICATION

(11) **EP 0 399 176 B1**
(45) Date of publication and mention of the grant of the patent: **28.05.1997**
(21) Application number: 90105866.9
(22) Date of filing: 28.03.1990
(51) Int. Cl.: H04M 1/02, H04B 1/034

(54) **Telephone handset operating as an independent unit**
Als unabhängige Einheit wirkender Telefonhandapparat
Combiné téléphonique opérant comme une unité indépendante

(30) Priority: 25.05.1989 FI 892561
(43) Date of publication of application: 28.11.1990
(73) Proprietor: NOKIA MOBILE PHONES LTD., 24101 Salo (FI)
(72) Inventor: Tattari, Jouko, SF-24100 Salo (FI)
(74) Representative: Johansson, Folke Anders

(56) References cited:
- EP-A- 0 282 597
- WO-A-82/03517
- FR-A- 2 593 656

## Description

The present invention relates to the construction of a telephone handset, more specifically the construction of a handset operating as an independent telephone unit.

Handsets of this type are battery-powered, small-sized portable telephone units working like mobile (car) phones and using a mobile phone system. Such a handset thus comprises all parts including the antenna required for a mobile station.

The handset comprises basically the same parts as for example the operating unit of a mobile phone, though the operating unit does not include the rf-parts, antenna and the batteries of the telephone.

An approach for the more independent operating of a mobile phone is known from EP-A-0 282 597. There, instead of always transmitting the voice signals between main unit and operating unit of the mobile phone by means of a cord, wireless transmitting of the voice signals between the operating unit and the main unit was accomplished by a wireless system. This system contains wireless transmitters and wireless receivers in both the operating unit and the main unit of the mobile phone. It is obvious that the system described in EP-A-0 282 597 is consisting of two units working in different places. The operating unit moves with the user while the main unit, which is necessary for the connection of the system to the telephone network, stays fixed at a distinctive place, e.g. in a car where it can be provided with electric power. An approach which offers more possibilities, such as to receive at any place a signal from the telephone network, would be to incorporate the main unit (which is receiving such signals from the telephone network) with all its functions and including the electric power supply into the operating unit to form an independent handset.

A stand-alone portable radio telephone unit is known from EP-A-0 276 403. Into this unit a chip card may be introduced either on the front part or rear part of the handset in order to enable the holder of this portable radio telephone unit to use it as he may insert his own card for identification. The parts of this portable radio telephone unit which is designed to take up the identification card has to be newly fabricated for the specific structure. New design and fabrication in order to fit the components in the housing requires accurate and time consuming design work. Therefore it was now realized regarding the manufacture and assembly, that it is most advantageous to utilize existing parts of an operating unit and in addition, to design the appearance of the handset to correspond to the operating unit as far as possible, whereby these two instruments readily can be identified as instruments from the same manufacturer. According to the present invention all parts of an existing handset (operating unit) can remain unchanged and therefore can be reused together with the new intermediate module part 3 according to the invention so as to achieve a stand-alone portable radio telephone unit from an existing handset of a mobile phone.

The features of the invention will be apparent from the enclosed claims.

The invention will be described further by way of an example with reference to the accompanying drawing, in which :
Figure 1 shows the operating unit of a mobile phone; and
Figure 2 shows a handset constructed utilizing parts of the operating unit.

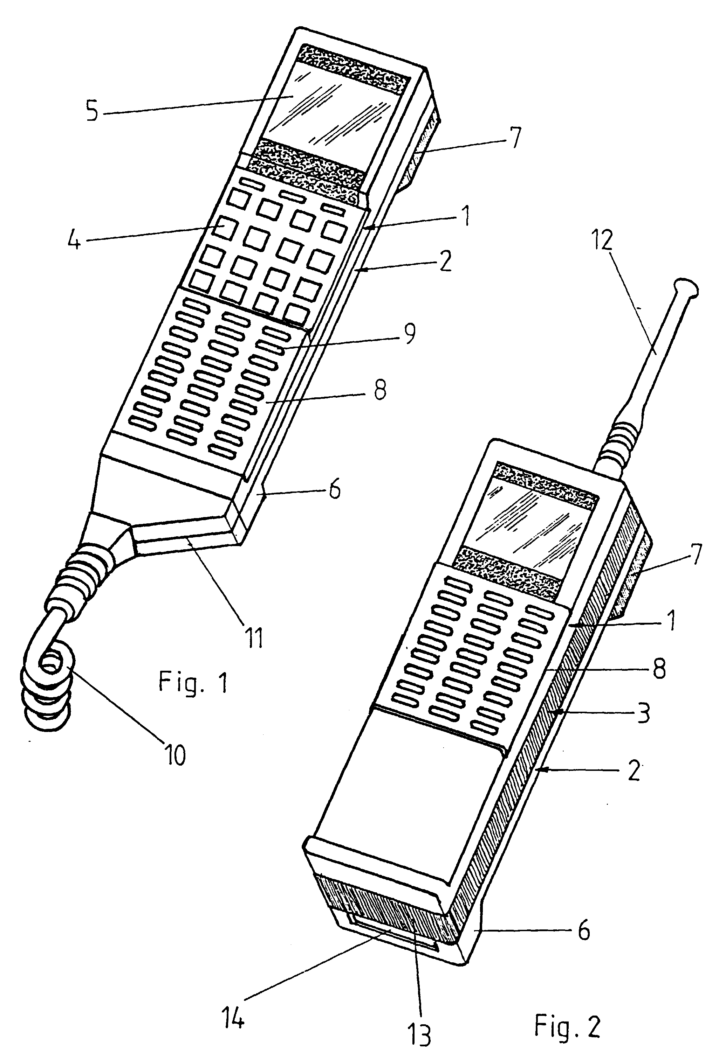

The operating unit according to figure 1 comprises generally an upper half 1 and a lower half 2, each being rectangular and joined together along the center line. The upper part 1 includes a key set 4 and a display 5. The lower part 2 includes a microphone 6 and an earphone 7.

If required, the instrument can be equipped with a sliding lid 8, which is provided with a prepared surface 8 and can be pushed over the key set 4 to cover it. The operating unit is connected to the main unit of the mobile phone with a spiral cord 10. The cable clamp part at 11 is closely attached to the microphone end of the operating unit.

In figure 2 there is shown a handset construction according 15 to the invention. This handset utilizes the above mentioned parts of 1 and 2 the operating unit. Between these parts there is provided in a sandwiched fashion an intermediate body 3 including the rf-part of the handset, the antenna 12 and the case for the batteries. At 14 is a connector, through which the handset also can be connected to e.g. the main unit of a mobile phone or to other auxiliaries. In the case of the operating unit, the cable clamp 11 covers this connector 14.

As a result of the construction according to the invention it is possible to use as many common parts as possible, thereby naturally saving in the costs of molds and other manufacturing costs. When required, the intermediate module part 3 may be provided with such contact means that it will automatically connect to the upper part 1 and the lower part 2 when the handset is assembled. It is quite obvious that the appearance of the operating unit and the handset may vary considerably from that shown in the drawing, without departing from the inventive idea.

## Claims

1. A telephone handset operating as an independent unit, comprising:
- means for an upper half (1) of an operating unit,
- means for a lower half (2) of an operating unit; the upper and lower half being joinable along a center line and comprising all parts to form an operating unit of a mobile phone; and
- means for an intermediate module (3) placeable in a sandwiched fashion between said upper and lower halves (1, 2) along said center line, said intermediate module (3) including radio frequency components, an antenna and battery means thus the assembly of said upper and lower halves (1, 2) with said intermediate module (3) comprising all parts to form a telephone handset operating as an independent unit.

2. A telephone handset according to claim 1, **characterized in** that the intermediate module (3) is in the shape of a rectangular plate placeable to said center line and joinable to said upper and lower halves (1, 2) of said operating unit.

3. A telephone handset according to claim 2, **characterized in** that the intermediate module (3) comprises the antenna (12) at one end and the battery case at the other end.

4. A telephone handset according to claim 1, **characterized in** that the lower half (2) of said operating unit comprises a microphone (6) and an earphone (7).

5. A telephone handset according to claim 1, **characterized in** that the upper half (1) of said operating unit comprises a key set (4) and a display (5).

6. A telephone handset according to claim 5, **characterized in** that the telephone handset comprises a sliding lid (8) that can be pushed over the key set (4).

7. A telephone handset according to claim 1, **characterized in** that the telephone handset comprises a connector (14) through which the handset can be connected to a main unit of a mobile phone or to other auxiliaries and that the connector (14) is coverable by a cable clamp (11).

8. A telephone handset according to claim 1, **characterized in** that the intermediate module (3) is provided with such contact means that it is automatically connectable to the upper half (1) and to the lower half (2) when the handset is assembled.

9. Method for the construction of a telephone handset operating as an independent unit, **characterized in** that an intermediate module (3) is placed in a sandwiched fashion between an existing upper half (1) and an existing lower half (2) of an operating unit of a mobile phone, the upper and lower halves comprising all parts to form an operating unit of a mobile phone and joining along a center line; said intermediate module (3) including radio frequency components, an antenna and battery means so that an assembly is constructed which comprises all components required for said telephone handset operating as an independent unit.

## Patentansprüche

1. Als unabhängige Einheit arbeitender Telefonhandapparat mit:
- Mitteln für eine obere Hälfte (1) einer Bedieneinheit,
- Mitteln für eine untere Hälfte (2) einer Bedieneinheit;
wobei die obere und die untere Hälfte entlang einer zentralen Linie verbunden werden können und alle Bestandteile enthalten, um eine Bedieneinheit zu bilden; und
- Mitteln für ein Zwischenmodul (3), welches zwischen der oberen und der unteren Hälfte (1. 2) entlang der zentralen Linie angeordnet werden kann, mit Funkfrequenzkomponenten, einer Antenne und Batteriemitteln, so daß folglich die Anordnung der unteren und oberen Hälfte (1, 2) zusammen mit dem Zwischenmodul (3) alle Bestandteile enthält, um einen als unabhängige Einheit arbeitenden Telefonhandapparat zu bilden.

2. Telefonhandapparat nach Anspruch 1, **dadurch gekennzeichnet**, daß das Zwischenmodul (3) die Form einer rechteckigen Platte aufweist, die an der zentralen Linie angeordnet und mit der oberen und unteren Hälfte (1, 2) der Bedieneinheit verbunden werden kann,

3. Telefonhandapparat nach Anspruch 2, **dadurch gekennzeichnet**, daß das Zwischenmodul (3) an einem Ende die Antenne und am anderen Ende den Batteriebehälter enthält.

4. Telefonhandappparat nach Anspruch 1, **dadurch gekennzeichnet**, daß die untere Hälfte (2) der Bedieneinheit ein Mikrophon (6) und einen Hörer (7) enthält.

5. Telefonhandapparat nach Anspruch 1, **dadurch gekennzeichnet**, daß die obere Hälfte (1) der Bedieneinheit einen Tastensatz (4) und eine Anzeige (5) enthält.

6. Telefonhandappparat nach Anspruch 5, **dadurch gekennzeichnet**, daß er einen verschiebbaren Deckel (8) enthält, der über den Tastensatz (4) geschoben werden kann.

7. Telefonhandapparat nach Anspruch 1, **dadurch gekennzeichnet**, daß er einen Anschluß (14) enthält, über den der Handapparat mit einer Haupteinheit eines mobilen Telefons oder anderen Zusatzeinrichtungen verbunden werden kann, und der Anschluß (14) durch eine Kabelschelle (11) abdeckbar ist.

8. Telefonhandapparat nach Anspruch 1, **dadurch gekennzeichnet**, daß das Zwischenmodul (3) mit derartigen Kontaktmitteln versehen ist, daß beim Zusammenbau automatisch eine Verbindung mit der oberen Hälfte (1) und der unteren Hälfte (2) zustande kommen kann.

9. Verfahren zur Konstruktion eines als unabhängige Einheit arbeitenden Telefonhandapparats, **dadurch gekennzeichnet**, daß zwischen einer vorhandenen oberen Hälfte (1) und einer vorhandenen unteren Hälfte (2) einer Bedienheinheit eines mobillen Telefons ein Zwischenmodul (3) angeordnet ist, wobei die obere und die untere Hälfte alle Bestandteile enthalten, um eine Bedieneinheit eines mobilen Telefons zu bilden und entlang einer zentralen Linie verbindbar sind; und daß das Zwischenmodul (3) Funkfrequenzkomponenten, eine Antenne und Batteriemittel enthält, so daß eine Anordnung gegeben ist, die alle Komponenten eines als unabhängige Einheit arbeitenden Telefonhandapparats enthält.

## Revendications

1. Combiné téléphonique fonctionnant sous forme d'une unité indépendante, comprenant :
- un moyen pour une moitié supérieure (1) d'une unité opérationnelle,
- un moyen pour une moitié inférieure (2) d'une unité opérationnelle;
les moitiés supérieure et inférieure pouvant être réunies suivant un axe et comprenant toutes les parties pour former une unité de traitement d'un téléphone mobile; et
- un moyen pour un module intermédiaire (3) pouvant être placé à la façon d'un sandwich entre lesdites moitiés supérieure et inférieure (1, 2) suivant ledit axe, ledit module intermédiaire (3) comportant des composants à radio-fréquence, une antenne et un moyen de batterie, l'assemblage desdites moitiés supérieure et inférieure (1, 2) avec ledit module intermédiaire (3) comportant ainsi toutes les parties pour former un combiné téléphonique fonctionnant en unité indépendante.

2. Combiné téléphonique selon la revendication 1, caractérisé en ce que le module intermédiaire (3) a la forme d'une plaque rectangulaire pouvant être placée selon ledit axe et pouvant être réunie auxdites moitiés supérieure et inférieure (1, 2) de ladite unité opérationnelle.

3. Combiné téléphonique selon la revendication 2, caractérisé en ce que le module intermédiaire (3) comprend l'antenne (12) à une extrémité et le coffre de batterie à l'autre extrémité.

4. Combiné téléphonique selon la revendication 1, caractérisé en ce que la moitié inférieure (2) de ladite unité opérationnelle comprend un microphone (6) et un écouteur (7).

5. Combiné téléphonique selon la revendication 1, caractérisé en ce que la moitié supérieure (1) de ladite unité opérationnelle comprend un clavier (4) et un écran d'affichage (5).

6. Combiné téléphonique selon la revendication 5, caractérisé en ce que le combiné téléphonique comprend un couvercle coulissant (8) qu'on peut pousser sur le clavier (4).

7. Combiné téléphonique selon la revendication 1, caractérisé en ce que le combiné téléphonique comprend un connecteur (14) grâce auquel le combiné peut être connecté à l'unité principale d'un téléphone mobile ou aux autres auxiliaires et en ce que le connecteur (14) peut être recouvert par un pince-câble (11).

8. Combiné téléphonique selon la revendication 1, caractérisé en ce que le module intermédiaire (3) comporte avec un moyen de contact tel qu'il peut être automatiquement connecté à la moitié supérieure (1) et à la moitié inférieure (2) lorsque le combiné est assemblé.

9. Procédé pour la construction d'un combiné téléphonique fonctionnant en unité indépendante, caractérisé en ce qu'un module intermédiaire (3) est placé à la façon d'un sandwich entre une moitié supérieure existante (1) et une moitié inférieure existante (2) d'une unité opérationnelle d'un téléphone mobile, les moitiés supérieure et inférieure comprenant toutes les parties pour former une unité opérationnelle d'un téléphonique mobile et étant réunies suivant un axe; ledit module intermédiaire (3) incorporant des composants à radio-fréquence, une antenne et un moyen de batterie, de sorte qu'un ensemble est construit qui comprend tous les composants nécessaires pour ledit combiné téléphonique fonctionnant en unité indépendante.
